# EUROPÄISCHE PATENTSCHRIFT

(11) **EP 3 358 957 B1**
(45) Veröffentlichungstag und Bekanntmachung des Hinweises auf die Patenterteilung: **19.02.2020**
(21) Anmeldenummer: 16785103.9
(22) Anmeldetag: 27.09.2016
(51) Int. Cl.: A21B 1/42, A47J 37/04, A21B 1/48

(54) **BACKOFEN MIT KOMBINIERTER WÄRMEÜBERTRAGUNG**
BAKING OVEN WITH COMBINED HEAT TRANSMISSION
FOUR À TRANSFERT DE CHALEUR COMBINÉ

(30) Priorität: 06.10.2015 DE 102015219267
(43) Veröffentlichungstag der Anmeldung: 15.08.2018
(73) Patentinhaber: Kuchenmeister GmbH, 59494 Soest (DE)
(72) Erfinder: JANK, Rüdiger, 16548 Glienicke (DE); GERMAN, Heiner, 13469 Berlin (DE)
(74) Vertreter: Maikowski & Ninnemann Patentanwälte Partnerschaft mbB
(86) Internationale Anmeldenummer: PCT/EP2016/072975
(87) Internationale Veröffentlichungsnummer: WO 2017/060129

(56) Entgegenhaltungen:
- AT-B1- 515 106
- CH-A- 386 360
- DE-U1- 29 616 533
- GB-A- 1 204 870
- US-A- 3 813 216
- US-A1- 2009 139 976

## Beschreibung

Die vorliegende Erfindung betrifft einen Backofen gemäß dem Oberbegriff des Anspruchs 1 und ein Verfahren zum kontinuierlichen Backen von Backgut in solch einem Backofen gemäß Anspruch 13.

### Beschreibung

In der industriellen Herstellung von Backwaren werden im Wesentlichen zwei Haupttypen von Backöfen eingesetzt: Tunnelöfen und Kammeröfen. Konventionelle Tunnelöfen weisen eine Backauflage in Form eines endlosen Transportbandes als Fördereinrichtung auf, dessen oberer Bandlauf typischerweise durch einen Heiztunnel führt, in welchem Wärmeträger die Wärmeenergie auf das Backgut übertragen.

Die Wärmeübertragung in Backöfen erfolgt vorwiegend durch Konvektion oder durch Strahlung.

So ist aus der DE 2647992 ein Tunnelofen bekannt, in dem durch an der Oberseite angeordnete und auf das Transportband gerichtete Düsen Heißluft in den Backraum und auf das Backgut geleitet wird. Das Backgut wird während des kontinuierlichen Durchlaufes einem Heißluftstrom ausgesetzt, welcher leicht regulierbar ist. Die Düsen bestehen in diesem Fall aus Schlitzen innerhalb eines an der Tunneldecke angeordneten Luftverteiler bzw. Luftverteilungskanals, der durchgängig vom Tunneleingang an der einen Seite zum Tunnelausgang an der anderen Seite des Backofens verläuft. Die Strahlungshitze, die durch die Wärmeübertragung aus dem Luftverteilungskanal entsteht, wird durch eine diagonale Kanalführung ausgeglichen. Im Bedarfsfall kann der Tunnelofen noch mit speziellen Heizmitteln wie zum Beispiel elektrischen Grillelementen versehen sein.

Die EP 280727 B1 beschreibt einen Backofen mit einer Fördereinrichtung und einer Wärmequelle, wobei die Wärmequelle aus einer Infrarotstrahlung besteht. Die erwärmte Luft wird von der Wärmequelle nach oben in Richtung Fördereinrichtung geleitet und mittels einer Ablenkplatte wird die erwärmte Luft auf die Oberseite des Backgutes gelenkt, so dass das Backgut durch eine Kombination aus Strahlung, Konvektion und Wärmeleitung gebacken wird. Durch die hohe Strahlungsintensität der Infrarotstrahlung, ist eine Energieübertragung durch Strahlung über den gesamten Backprozess nur bei Produkten möglich, die eine Backzeit unter 180sec benötigen.

Die DE 29616533U1 offenbart wiederum einen Backofen in Form eines Etagenbackofens, bei dem das Backgut auf den Etagen eines in den Backraum einfahrbaren Wagens liegt und die Heizplatten im Backraum derart angeordnet sind, dass sie zwischen die Etagen des Backwagens greifen. Dabei werden die Heizplatten so angeordnet, dass sie sich über die gesamte Backgutfläche erstrecken, so dass die einzelnen Stücke gleichmäßig von der Wärmestrahlung erfasst werden. Die Heizplatten sind hier aus zwei zwischen einander Heizmittelkanäle einschließenden, miteinander verschweißten Blechen gebildet. Die Erwärmung der Heizplatte erfolgt mittels geeigneter Heizmittel wie Dampf oder Öl, die durch die Heizmittelkanäle geleitet werden. Die Wärmeverteilung wird durch die Änderung der Kanalquerschnitte optimiert. Es handelt sich hierbei um reine Strahlungsöfen, in denen eine Konvektion nicht vorgesehen ist.

Auch die US 2009/139976A1 und GB 1 204 870 A offenbaren einen Backofen mit kombinierter Wärmeübertragung.

Es ist auch bekannt, Backraumluft aus einem Ofensegment abzusaugen und in den Ofen unter backrauminterner Aufheizung wieder einzubringen. Hierbei streicht Konvektionsluft über die Außenseite von mit Heizgas durchströmten Rohrleitungen die oberhalb und unterhalb des Backgutes angeordnet sind an das Backgut. Durch die von Heizgas durchströmten Rohrleitungen wird zwar neben der konvektiv übertragenen Wärme auch Wärme durch Strahlung an das Backgut übertragen, nachteilig ist jedoch, dass je Segment die Anströmung des Backguts immer nur aus einer Strömungsrichtung, also entweder von oben mit Absaugung unten oder von unten mit Absaugung oben möglich ist.

Bekannt ist auch, Luft aus einem Ofensegment abzusaugen und in dieses mit externem Energieeintrag wieder einzubringen. Hierbei streicht die Konvektionsluft über einen beheizten Wärmetauscher, der außerhalb des Backraums angeordnet ist. Durch diese Bauweise wird in jedem Segment das Backgut sowohl von oben als auch von unten angeströmt. Der Nachteil dieser Bauweise ist jedoch, dass durch die externe Erhitzung der Konvektionsluft und deren Einbringung in den Backraum mittels Luftkanälen neben der konvektiv übertragenen Wärme keine relevante Wärme durch Strahlung an das Backgut übertragen wird.

Es ist ebenfalls bekannt, Luft aus einem Ofensegment abzusaugen und in dieses unter backrauminterner Aufheizung wieder einzubringen, wobei die Konvektionsluft über die Außenseite von mit Thermoöl durchströmten Rohrleitungen streicht, die unterhalb des Backgutes angeordnet sind. Durch die mit Heizgas durchströmten Rohrleitungen wird neben der konvektiv übertragenen Wärme auch Wärme durch Strahlung an das Backgut übertragen. Der Nachteil dieser Bauweise ist jedoch, dass je Segment die Anströmung des Backgutes immer nur aus einer Richtung oder einer Seite möglich ist. Ein weiterer Nachteil besteht darin, dass die wärmedurchströmten Rohrleitungen mit starken Stahlwandungen Materialaufwendig gefertigt werden müssen.

Als nachteilig hat sich bei den aus dem Stand der Technik bekannten technischen Lösungen zur Kombination der Wärmeübertragungsarten herausgestellt, dass keine klare Abgrenzung einzelner Backzonen vorliegt, so das eine getrennte Regelung bzw. Ansteuerung der Backzonen nicht möglich ist, d.h. keine getrennte Regelung oder Ansteuerung der Backzonen. Darüber hinaus bieten die bisher bekannten Backverfahren und Backöfen keine multivariable Nutzung von Konvektion und Strahlung.

Es ist daher eine Aufgabe der vorliegenden Erfindung, einen Backofen mit kompakter Bauform bereitzustellen, welcher eine gleichzeitige und wechselnde Übertragung von Wärme durch Strahlung als auch durch Konvektion an das Backgut ermöglicht, wobei die durch Strahlung und durch Konvektion zu übertragenden Wärmeanteile getrennt voneinander regelbar sind.

Diese Aufgabe wird erfindungsgemäß durch einen Backofen mit den Merkmalen des Anspruchs 1 gelöst.

Demnach wird ein Backofen mit einem Backraum und mit mindestens einer in dem Backraum für das Backgut vorgesehenen Ablage bereitgestellt. Bei der Ablage kann es sich um eine durch den Backraum führende Fördereinrichtung zur Förderung des Backgutes durch den Backraum, insbesondere um ein Transportband, handeln.

Der vorliegende Backofen ist durch mindestens zwei Backzonen gekennzeichnet, wobei jede dieser mindestens zwei Backzonen
- mindestens ein erstes Mittel zur Konvektionsbeheizung der Oberseite und/oder Unterseite des sich auf der mindestens einen Ablage befindlichen Backgutes, und
- mindestens ein zweites Mittel zur Strahlungsbeheizung der Oberseite und/oder Unterseite des sich auf der mindestens einen Ablage befindlichen Backgutes umfasst, wobei das mindestens eine erste Mittel zur Konvektionsbeheizung und das mindestens eine zweite Mittel zur Strahlungsbeheizung in den mindestens zwei Backzonen jeweils unabhängig voneinander ansteuerbar bzw. regelbar sind.

Der vorliegende Backofen ermöglicht durch die spezifische Verwendung bzw. Anordnung der Konvektionsbeheizung und der Strahlungsbeheizung eine gezielte Wärmeverteilung im Ofen wahlweise oder parallel durch Konvektion oder Strahlung. Die kombinierte bzw. wahlweise Nutzung von Strahlung und/oder Konvektion ermöglicht eine multivariable Prozessgestaltung.

Die vorliegende Vorrichtung ermöglicht insbesondere eine gleichmäßige Konvektion, die gezielt steuerbar ist. So ist eine Steuerung der Wärmeübertragung durch eine gezielte (d.h. vertikal zur Transportrichtung des Backgutes) Führung der Konvektionsluft möglich. Hierzu wird die Konvektionsluft gezielt in den Backraum und senkrecht gerichtet auf das Backgut und an den Seiten des Backgutes vorbei eingeführt.

In einer Ausführungsform erfolgt die Steuerung der Konvektionsluft durch unterschiedliche Druckverhältnisse im Backraum und unterhalb des Förderbandes bzw. der Backablage. So herrscht unterhalb des Transportbandes bzw. der Backablage ein Überdruck und im Backraum (oberhalb des Backgutes) ein Unterdruck. Durch die Druckdifferenz wird eine vertikale Einströmung der Konvektionsluft in den Backraum ermöglicht.

Die Druckunterschiede werden insbesondere durch ein Absaugen der im Backraum erhitzten Luft (oberhalb des Backgutes) und Rückführung der erhitzten Luft zur Konvektionsbeheizung bewirkt; d.h. es erfolgt eine Kreislaufführung der Luft innerhalb des vorliegenden Backofens. Wie noch später im Detail erläutert wird hierzu die Luft aus dem Backraum mittels einer geeigneten Absaugvorrichtung abgesaugt und zur Konvektionsbeheizung zurückgeführt.

Jedes Backgut erfordert zur Ausbildung der gewünschten Gebäckeigenschaften spezifische, voneinander teilweise sehr unterschiedliche Anforderungen an Strahlung und Konvektion von oben und/oder unten. Die Erfindung begegnet damit der Anforderung an kontinuierlich backende Öfen nach größerer Flexibilität, die aus der gestiegenen Produktvielfalt und den dadurch bedingten kleineren Losgrößen herrührt. Die Kombination von Strahlung und/oder Konvektion ermöglicht somit die Bereitstellung einer wesentlich breiteren Produktpalette an Backwaren, eine gezielte Einwirkung auf den Backprozess und eine Verkürzung der Backzeit durch die der Rezeptur bzw. den Backwaren angepasste spezifische Wärmeübertragungsart, die sich im Verlauf des Backprozesses entsprechend der Gebäckentwicklung verändern kann.

Durch die unabhängige Regulierung der Heizmittel, wie dem Mittel zur Konvektionsbeheizung, ist z.B. eine wahlweise Anströmung des Backgutes mit heißer Luft bzw. Konvektionsluft von oben, von unten oder von oben und unten möglich (d.h. von allen Seiten). Dasselbe trifft auf die Strahlungsheizung zu, die wahlweise von oben, von unten oder von oben und unten auf das Backgut erfolgen kann. Durch die Segmentierung des Backofens in mehrere Backzonen ist eine Auftrennung bzw. Unterteilung des Backverfahrens bzw. Backprozesses in mehrere Phasen möglich. So kann der Backprozess durch Verwendung von möglichst kleinen Segmenten (z.B. 10 Segmente oder Backzonen) in die gleiche Anzahl (z.B. 10) verschiedene Phasen getrennt werden. Dadurch ist eine gezielte Einflussnahme durch die Wärmeübertragungsart und der Energieintensität, die durch die Temperatur und die Strömungsgeschwindigkeit gesteuert wird, in Abhängigkeit von der Rezeptur und des Verlaufes des Backprozesses möglich. Dies ermöglicht eine separate Einstellung der Temperatur in jeder Backzone.

In einer Ausführungsform des vorliegenden Backofens sind das mindestens eine erste Mittel zur Konvektionsbeheizung und das mindestens eine zweite Mittel zur Strahlungsbeheizung in jeder der mindestens zwei Backzonen jeweils alternierend angeordnet, d.h. es folgen abwechselnd ein Mittel zur Konvektionsbeheizung, ein Mittel zur Strahlungsbeheizung, ein Mittel zur Konvektionsbeheizung etc.

In einer weiteren Ausführungsform umfasst der vorliegende Backofen mindestens 3, 4, 5 oder mehr z.B. 10 Backzonen bzw. Segmente. Die Anzahl der Segmente bzw. Backzonen ist dabei abhängig von der Größe des Backofens, insbesondere abhängig von der Länge des Backofens bzw. Backraums.

So kann die Länge einer Backzone bzw. eines Segmentes in Abhängigkeit von der Breite des Backraumes zwischen 1 und 3 m, bevorzugt zwischen 1,5 und 2,5 m betragen. Die Breite eines Backraumes liegt typischerweise zwischen 0,8 und 4,0 m, bevorzugt zwischen 1,6 und 3,3 m.

Jede Backzone bzw. jedes Segment des Backofens kann separat verwendet werden, d.h. in jedem einzelnen Segment kann unabhängig von einem anderen Segment wahlweise Strahlung-und/oder Konvektionsheizung verwendet werden. Mit anderen Worten, es kann in jedem Segment unabhängig entweder hauptsächlich Strahlungsheizung, hauptsächlich Konvektionsheizung oder beide Heizungsarten verwendet werden. Im Falle der vorzugsweisen oder hauptsächlichen Verwendung von Konvektionsheizung ist ein geringer Anteil von Strahlungsheizung allerdings nicht ausschließbar, wohingegen es durchaus möglich ist, nur Strahlungsheizung zu verwenden.

In einer ersten Variante ist es möglich, nur eine Backzone oder ein Segment anzusteuern. Im Falle von mehr als zwei Backzonen kann z.B. nur jede weitere Backzone bedient werden.

Auch ist eine beliebige Kombination der Heizungsmittel bzw. Wärmeübertragungsarten in den Backzonen vorstellbar. So kann zum Beispiel in einem ersten Segment bzw. in einer ersten Backzone ausschließlich Konvektionsstrahlung zum Einsatz kommen und in einem zweiten Segment bzw. einer zweiten Backzone kann ausschließlich Strahlungsheizung verwendet werden. Es ist auch denkbar, dass in zwei aufeinanderfolgenden Segmenten bzw. Backzonen lediglich Konvektionsheizung verwendet wird, und in einem sich anschließenden Segment bzw. sich einer anschließenden Backzone lediglich Strahlungsheizung oder umgekehrt zum Einsatz kommt. Den Kombinationsmöglichkeiten sind dabei keine Grenzen gesetzt.

Nicht nur ist eine beliebige Kombination der Heizungsmittel bzw. Wärmeübertragungsarten in jeder separaten Backzone denkbar und möglich, sondern es ist auch jede beliebige Kombination der Wärmeübertragung hinsichtlich der Ober- und Unterhitze denkbar. So kann in einer Backzone die Oberhitze vorzugsweise durch Strahlung und die Unterhitze vorzugsweise durch Konvektion oder umgekehrt, d.h. Oberhitze durch Konvektion und Unterhitze durch Strahlung übertragen werden. Auch ist es denkbar, die Oberhitze durch eine Kombination von Strahlung und Konvektion zu übertragen und die Unterhitze vorzugsweise durch Strahlung oder Konvektion oder umgekehrt zu übertragen.

In einer weiteren bevorzugten Ausführungsform des vorliegenden Backofens umfasst das mindestens eine erste Mittel zur Konvektionsbeheizung mindestens eine Eintrittsöffnung zum Zuführen heißer Luft bzw. Konvektionsluft in den Backraum des Backofens. Diese Eintrittsöffnung kann in Form einer Düse, eines Schlitzes, einer Lochöffnung oder eines Lochbleches vorliegen.

Es ist weiterhin bevorzugt, dass die mindestens eine Eintrittsöffnung zum Zuführen heißer Luft bzw. Konvektionsluft in den Backraum in mindestens einem oberhalb und/oder unterhalb der mindestens einen Fördereinrichtung vorgesehenen Windkanal (Windkasten, Luftverteilungskasten) angeordnet ist. Pro Backzone bzw. Segment ist dabei mindestens ein Windkanal vorgesehen.

Die mindestens eine Eintrittsöffnung zum Zuführen heißer Luft oder Konvektionsluft in den Backraum ist wie oben angeführt separat ansteuerbar, d.h. jede Eintrittsöffnung für heiße Luft kann für jede Backzone bzw. jedes Segment separat gedrosselt oder ausgeschaltet werden. Die Anzahl der Eintrittsöffnungen für die heiße Luft in den Backraum ist dabei abhängig von der Art der verwendeten Öffnungen.

Werden zum Beispiel als Eintrittsöffnung Düsen verwendet, können pro Backzone bzw. Segment zwischen 1 und 1000, bevorzugt zwischen 200 und 800, insbesondere bevorzugt zwischen 400 und 600 Düsen verwendet werden. Beispielhaft sind pro Backzone bzw. pro Segment bei einer Backraumbreite von 3300 mm und einem Düsenabstand von ca. 50 mm ca. 60 Düsen pro Reihe vorgesehen. In diesem Fall beträgt der Reihenabstand ca. 200 mm. Das bedeutet, dass bei einer Segmentlänge von 2400 mm 12 Reihen mit 60 Düsen, also insgesamt pro Backzone bzw. pro Segment 720 Düsen für die Zufuhr von heißer Luft in den Backraum vorhanden sind.

Es ist ebenfalls möglich, statt Düsen Schlitze als Eintrittsöffnungen für die heiße Luft bzw. Konvektionsluft in den Backraum vorzusehen, wobei in diesem Falle pro Segment bzw. pro Backzone 6 bis 12 Schlitzdüsen vorgesehen sind.

In einer weitergehenden Ausführungsform des vorliegenden Backofens beträgt die Strömungsgeschwindigkeit der Konvektionsluft an den Eintrittsöffnungen der Heißluft bzw. Konvektionsluft in den Backraum zwischen 2,0-10 m/Sekunde, bevorzugt 3,0-5,0 m/Sekunde. Die definierte Strömungsgeschwindigkeit der Konvektionsluft ermöglicht eine gezielte Konvektion an den Seiten des Backgutes vorbei in den Backraum hinein. Entsprechend wird nicht nur die Unterseite des Backgutes von der Konvektionsluft gebacken, sondern auch die Seiten des Backgutes, wodurch eine insgesamt gleichmäßig gebackene Oberfläche bewirkt wird und die Seitenstabilität des Backgutes erreicht wird.

Der mindestens eine Windkanal (Luftkanal, Windkasten) ist bevorzugt im Längsschnitt konisch bzw. pyramidenförmig oder kegelförmig, insbesondere in Form eine stumpfen Kegels gestaltet, um Druckverlust und reduzierte Strömungsgeschwindigkeit auszugleichen. Die heiße Luft wird bevorzugt über die Deckfläche in den Windkanal eingeleitet. Die der Deckfläche gegenüberliegende Fläche (Grundfläche) weist entsprechend die Eintrittsöffnungen z.B. in Form von Düsen für die heiße Luft in dem Backraum auf.

Die Anzahl der Windkanäle pro Backzone ist vorliegend abhängig von der Ofenbreite des Backofens. So können bei breiten Öfen pro Backzone bzw. pro Segment auch zwei Windkanäle vorgesehen sein, die bevorzugt parallel oder auch gegenüberliegend zueinander verlaufen.

Die durch den Windkanal und die Eintrittsöffnungen in den Backraum einzuführende heiße Luft kann in einer Variante durch einen Heißlufterzeuger bereitgestellt werden. In diesem Falle ist der pro Segment bzw. pro Backzone vorgesehene Windkanal bevorzugt mit einem Heißlufterzeuger verbunden.

In einer bevorzugten Ausführungsform wird hingegen die als Konvektionsluft verwendete Heißluft aus dem Backraum abgeführt und in den Windkanal eingeführt. Entsprechend umfassen die mindestens zwei Backzonen bzw. Segmente des Backofens jeweils mindestens eine Vorrichtung, bevorzugt zwei Vorrichtungen zum Absaugen der in dem Backraum erhitzten Luft. Die aus dem Backraum abgesaugte erhitzte Luft wird durch das mindestens eine erste Mittel zur Konvektionsbeheizung (d.h. durch die Eintrittsöffnungen in dem Windkanal) in den Backraum zurückgeführt. Mit anderen Worten, die Heißluft wird bevorzugt in einem Kreislauf innerhalb des Backraums geführt. Die aus dem Backraum in der entsprechenden Backzone entnommene Backraumluft wird bevorzugt nach Oberhitze und Unterhitze getrennt und in die oberhalb und unterhalb des Backraums in der korrespondierenden Backzone angeordneten Windkanäle eingebracht, ggf. zusätzlich erwärmt und dort gleichmäßig verteilt. Entsprechend dient eine Absaugvorrichtung pro Backzone zum Absaugen der Oberhitze und eine Absaugvorrichtung zum Absaugen der Unterhitze aus dem Backraum.

In einer weiteren bevorzugten Ausführungsform des vorliegenden Backofens ist das mindestens eine zweite Mittel zur Strahlungsheizung in Form von mindestens einem Wärmetauscher vorgesehen. Der mindestens eine Wärmetauscher ist dabei aus mindestens zwei miteinander verbundenen, bevorzugt miteinander verschweißten, und mindestens einen Hohlraum ausbildenden Blechen ausgebildet.

Der zwischen den Blechen ausgebildete Hohlraum wird von mindestens einem Wärmeträger, bevorzugt Thermoöl durchströmt. Die höhere Wärmekapazität des Thermoöls gegenüber Luft ermöglicht einen höheren Wirkungsgrad der Strahlung im Vergleich zu anderen Wärmeträgern wie Heißluft.

Derartige Wärmetauscher sind auch als sogenannte Pillow Plates bekannt und erhältlich. Ein Pillow Plate besteht aus zwei Edelstahlblechen, die zum Beispiel mittels Schweißung in einem definierten Raster verbunden werden. Das gewählte Schweißraster ergibt sich durch den erforderlichen Betriebsdruck und der Betriebstemperatur. Nach dem Schweißen werden die Bleche aufgeblasen und es entsteht ein Hohlraum, in welchem das Heizmedium (oder auch Kühlmedium) strömt. Weisen beide Bleche eine gleiche Dicke auf, ergibt sich ein sogenanntes doppelseitig profiliertes Pillow Plate.

Durch die geringe Bauhöhe der beschriebenen Heizplatten wird zudem der Vorteil erzielt, dass bei einer Anwendung in Mehretagenöfen eine kompaktere Ofenbauweise erzielt wird, in dem bei gleicher Bauhöhe eine größere Anzahl von übereinander angeordneten Backetagen möglich ist.

Wie oben bereits erwähnt, ist der mindestens eine Wärmetauscher als Mittel zur Strahlungsbeheizung separat ansteuerbar. Dies wird vorliegend durch eine Ansteuerung des jeweiligen Wärmetauschers bzw. der jeweiligen Heizplatte mittels einer separaten ThermoölPumpe bewirkt, die frequenzgesteuert ausgebildet ist.

In einer bevorzugten Ausführungsform des vorliegenden Backofens sind die Eintrittsöffnungen für die Konvektionsluft alternierend jeweils zwischen den Wärmetauscherplatten angeordnet. In diesem Fall sind die Wärmetauscherplatten (z.B. Pillow Plates) an der Unterseite des Windkanals, d.h. an der Seite des Windkanals die auf das Backgut gerichtet ist, befestigt, wobei eine Wärmetauscherplatte jeweils zwischen zwei Eintrittsöffnungen für die Konvektionsluft vorgesehen ist.

Es ist ebenfalls möglich, dass die Eintrittsöffnungen des ersten Mittels zur Konvektionsbeheizung unmittelbar in den Wärmetauscherplatten vorgesehen sind. In diesem Fall sind die Eintrittsöffnungen zwischen den den Wärmeträger führenden Hohlräumen der Wärmetauscherplatten in die Platten eingebracht; es liegt somit eine einstückige Kombination von Eintrittsöffnungen als erstem Mittel zur Konvektionsbeheizung und Wärmetauscherplatte als zweitem Mittel zur Strahlungsbeheizung des Backgutes vor.

In beiden Fällen passiert die heiße Luft bei Durchtritt durch die Eintrittsöffnungen bzw. Luftdurchlässe aus dem Windkanal in den Backraum den aufgeheizten Wärmetauscher und wird somit noch zusätzlich aufgeheizt. Zusätzlich zu der Anreicherung der Konvektionsluft mit kinetischer Energie durch die Lüfter erfolgt in den Eintrittsöffnungen bzw. Luftdurchlässen eine weitere Aufnahme von kinetischer Energie zur Übertragung des konvektiven Wärmeanteils, wobei diese von oben und/oder von unten auf das Backgut gerichtet ist. Darüber hinaus unterstützt in der Oberhitze der Injektoreffekt die Wärmeübertragung, da durch diesen die im Kopfraum des Backraums angestaute Luft in Richtung Backgut gefördert wird.

Der vorliegend beschriebene Backofen wird zum kontinuierlichen Backen von Brot, Backwaren und Feingebäck verwendet.

Ein Verfahren zum kontinuierlichen Backen von Backgut in einem erfindungsgemäßen Backofen umfasst dabei die folgenden Schritte:
- Einführen des auf der mindestens einen Ablage, z.B. Fördereinrichtung abgelegten Backgutes in den mindestens einen Backofen;
- Backen des Backgutes in den mindestens zwei Backzonen des Backofens, wobei die Wärmeübertragung in jeder der mindestens zwei Backzonen durch Ober- und/oder Unterhitze durch Konvektion und/oder Strahlung erfolgt.
- Ausführen des gebackenen Backgutes aus dem mindestens einen Backofen.

Die Wärmeübertragung durch Ober- und/oder Unterhitze kann somit für jede Backzone bzw. Segment variabel gestaltet werden. So können in einer Backzone die Oberhitze und Unterhitze jeweils durch eine Kombination von Konvektion und Strahlung bereitgestellt werden. In einer anderen Variante ist es möglich, dass die Oberhitze ausschließlich durch Konvektion und die Unterhitze durch eine Kombination von Konvektion und Strahlung (und *vice versa*) vorgesehen ist. Es ist auch denkbar, dass in einer Backzone bzw. Segment Ober- und/oder Unterhitze ausschließlich durch Konvektion und der nächsten Backzone bzw. Segment Ober- und/oder Unterhitze ausschließlich durch Strahlung bereitgestellt wird. Aufgrund der unabhängigen Ansteuerung der Beheizungsmittel in jeder der Backzonen sind den Kombinationsmöglichkeiten hier keine Grenzen gesetzt.

Die Backtemperaturen im Backraum liegen in Abhängigkeit von der Art des Backgutes zwischen 150°C und 320°, bevorzugt zwischen 160°C und 250°C. Die Backtemperatur wird bevorzugt für jede einzelne Backzone separat eingestellt und gesteuert.

In einer Ausführungsform des vorliegenden Verfahrens kann das Backverfahren in einem Backofen z.B. mit 10 Backzonen wie folgt gestaltet sein.

In einer ersten Backzone wird die Unterhitze durch Konvektion und Strahlung und die Oberhitze durch Konvektion übertragen, wobei die Backtemperatur z.B. bei 210 bis 220°C liegt. In einer zweiten Backzone erfolgt die Wärmeübertragung in Analogie zu der ersten Backzone, wobei die Backtemperatur z.B. bei 200 bis 210°C liegen kann. In einer dritten Backzone werden sowohl Oberhitze als auch Unterhitze durch Konvektion und Strahlung bereitgestellt, wobei der Strahlungsanteil z.B. 50% beträgt. Die Backraumtemperatur kann in dieser Backzone zwischen 190 und 200°C liegen. In der vierten bis achten Zone erfolgt die Wärmeübertragung (Ober- und Unterhitze) vorzugsweise durch Strahlung, wobei eine Backtemperatur zwischen 180 und 190°C einstellbar ist. In der neunten und zehnten Backzone wird die Oberhitze durch Strahlung und die Unterhitze durch Konvektion übertragen.

Die Erfindung wird nachfolgend unter Bezugnahme auf die Figuren an einem Ausführungsbeispiel näher erläutert. Es zeigen:
- Figur 1A: eine schematische Darstellung einer ersten Ausführungsform eines Backofens gemäß der vorliegenden Erfindung;
- Figur 1B: eine schematische Darstellung einer weiteren Ausführungsform eines Backofens gemäß der vorliegenden Erfindung;
- Figur 2A: eine vergrößerte Darstellung eines Ausschnitts eines Backofens gemäß der Ausführungsform in Figur 1A;
- Figur 2B: eine vergrößerte Darstellung eines Ausschnitts eines Backofens gemäß der Ausführungsform in Figur 1B; und
- Figur 3: eine schematische Seitenansicht einer ersten Ausführungsform eines in einem Backofen gemäß der vorliegenden Erfindung verwendeten Mittels zur Strahlungsbeheizung.

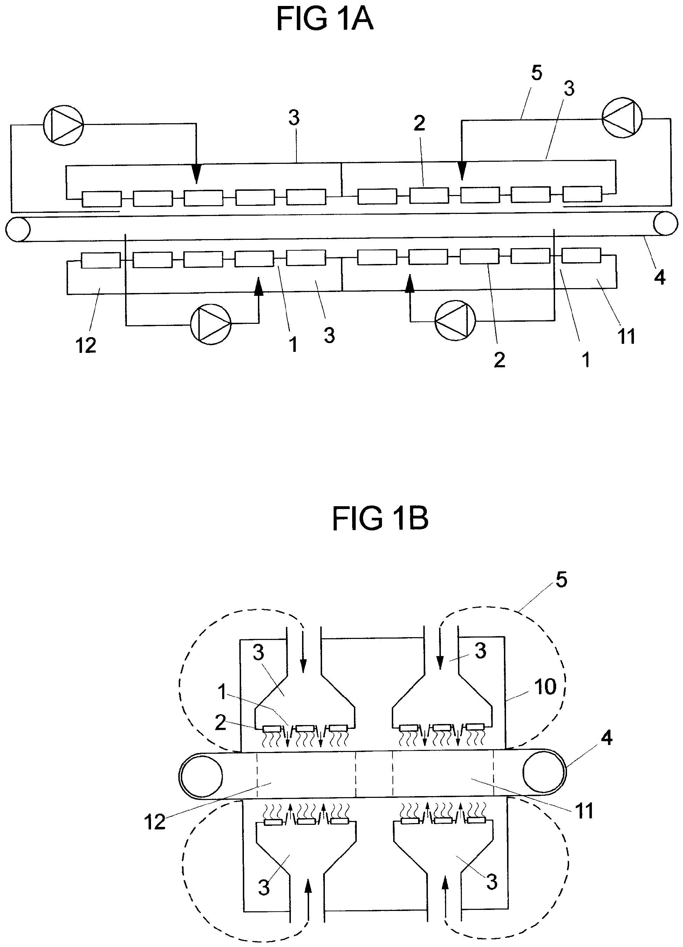

Figuren 1A, B zeigen jeweils eine Ausführungsform des erfindungsgemäßen Backofens 10, wobei der Backofen als Tunnelofen mit einem Transportband 4 als durch den Backraum führenden Fördereinrichtung für das Backgut ausgebildet ist.

Der Backofen 10 umfasst eine erste Backzone 11 und eine zweite Backzone 12. Jede der Backzonen 11,12 umfasst eine Eintrittsöffnung 1 für Konvektionsluft, welche auf der in Richtung der auf dem Transportband 4 abgelegten Backgutes gerichteten Seite eines Windkanals 3 vorgesehen ist.

An der Unterseite des Windkanals 3 (das heißt an der Seite des Windkanals, die in Richtung des Backgutes zeigt) sind ebenfalls Wärmetauscherplatten 2 zur Strahlungsbeheizung des auf dem Transportband 4 abgelegten Backgutes angeordnet.

Die Eintrittsöffnungen 1 für Konvektionsluft 5 bzw. Konvektionsbeheizung und die Wärmetauscherplatten 2 für Strahlungsbeheizung sind in jeder Backzone jeweils alternierend angeordnet, wobei sowohl die jeweiligen Eintrittsöffnungen 1 für die Konvektionsluft 5 als auch die Wärmetauscherplatten 2 separat ansteuerbar sind (nicht gezeigt).

In jeder Backzone 11, 12 sind in der Ausführungsform der Figur 1 jeweils zwei konisch geformte Windkanäle 3 vorgesehen, wobei jeweils ein Windkanal 3 auf die Oberseite des Backgutes gerichtet ist und ein Windkanal 3 auf die Unterseite des Backgutes gerichtet ist.

Die über die Windkanäle 3 in den Backraum eingeleitete Konvektionsluft 5 wird aus dem Backraum der jeweiligen Backzone bzw. des jeweiligen Segments entnommen (abgesaugt) und getrennt nach Oberhitze und Unterhitze in die jeweils oberhalb und unterhalb des Backraums angeordneten Windkanäle 3 eingeführt und gleichmäßig verteilt.

Die Anzahl der Eintrittsöffnungen 1 pro Windkanal 3 bzw. pro Backzone beträgt im Falle der Ausbildung der Eintrittsöffnungen 1 als Düse bei einer Backraumbreite von 3300 mm und einen Düsenabstand von ca. 50 mm bis zu 60 Düsen pro Reihe. Bei einem Reihenabstand von 200 mm und einer Backzonen Länge von 2400 mm sind 12 Reihen mit 60 Düsen also insgesamt 720 Düsen vorhanden.

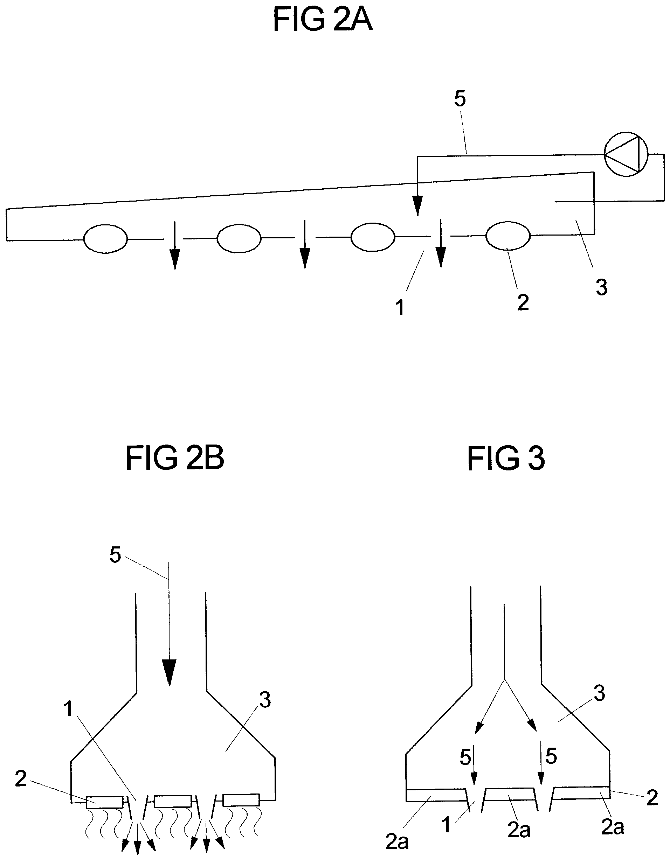

Die Wärmetauscherplatten 2 sind in Form von sogenannten Pillow Plates ausgebildet (siehe auch Figur 3). Die Beheizung der Wärmetauscherplatten 2 erfolgt mittels Thermoöl, welches durch den Hohlraum der Wärmetauscherplatten 2 durchgeführt wird. Jede Wärmetauscherplatte 2 ist separat durch eine Thermoölpumpe ansteuerbar.

Figur 2A, B zeigen einen Ausschnitt der in Figur 1A, B jeweils gezeigten Ausführungsformen. Der Ausschnitt zeigt im Detail die Anordnung der Eintrittsöffnungen 1 für die Konvektionsluft 5 und Wärmetauscherplatten 2, die alternierend an der Seite eines Windkanals 3 angeordnet sind, wobei die Seite des Windkanals 3 in Richtung des Backgutes zeigt, das auf einem Transportband 4 abgelegt ist.

Durch die Eintrittsöffnung 1 wird die Konvektionsluft 5, die aus dem Backraum in der jeweiligen Backzone abgesaugt wird, zwischen den Wärmetauscherplatten 2 in den Backraum eingeführt. Aufgrund der Anordnung der Eintrittsöffnungen 1 zwischen den Wärmetauscherplatten 2, welche von einem Thermoöl erwärmt werden, erfolgt ein Aufheizen der Konvektionsluft 5 vor Eintritt in den Backraum. Die so aufgeheizte Konvektionsluft 5 dient dem Backen des Backgutes mittels Konvektionsheizung. Die durch das Thermoöl erhitzten Wärmetauscherplatten 2 wiederum ermöglichen eine Strahlungsbeheizung des Backgutes. Sowohl Eintrittsöffnungen 1 als auch Wärmetauscherplatten 2 sind separat ansteuerbar in Abhängigkeit von dem im Backraum befindlichen Backgut.

Figur 3 zeigt einen Ausschnitt einer vorliegend zum Einsatz kommenden Wärmetauscherplatte 2. Die Wärmetauscherplatte 2 in Form eines sogenannten Pillow Plates besteht aus zwei gegenüberliegenden Blechen, die an bestimmten Stellen miteinander verschweißt sind. Durch Aufblasen der Bleche bildet sich ein Hohlraum 2a zwischen den Blechen aus, durch den das Thermoöl als Wärmetauscher fließen kann.

In der Ausführungsform der Figur 3 sind Löcher zwischen den das Thermoöl führenden Hohlräumen 2a eingefügt, die als Eintrittsöffnung 1 für die Konvektionsluft 5 aus dem Windkanal 3 dienen können. Im Falle der in Figur 3B gezeigten Ausführungsform wird die einstückige Kombination von Eintrittsöffnung 1 für Konvektionsluft und Wärmetauscherplatte 3 direkt als eine dem Windkanal 3 abschließende Seite (die Seite des Windkanals, die in Richtung des Backgutes zeigt) in den Windkanal 3 eingebaut.

### Ausführunasbeispiel

Hefekleingebäck in Backgutträgern wird in einem Backofen mit 10 Segmenten bzw. Backzonen mit folgenden Verfahrensparametern gebacken:
- 1. Zone: Übertragung der Unterhitze durch Konvektion und Strahlung, Übertragung der Oberhitze vorzugsweise durch Konvektion, Backtemperatur: 210°C
- 2. Zone: wie erste Zone, Backtemperatur 200°C
- 3. Zone: Übertragung der Unterhitze durch Konvektion und Strahlung, Übertragung der Oberhitze durch Strahlung und Konvektion. Der Strahlungsanteil beträgt 50%, Backraumtemperatur: 190°C
- 4.Zone bis 8. Zone: Wärmeübertragung vorzugsweise durch Strahlung, Backraumtemperatur: 180°C
- 9. Und 10. Zone: Übertragung der Oberhitze vorzugsweise durch Strahlung, Übertragung der Unterhitze vorzugsweise durch Konvektion

## Patentansprüche

1. Backofen (10) mit einem Backraum und mit mindestens einer in dem Backraum für das Backgut vorgesehenen Ablage (4)
**gekennzeichnet durch**
mindestens drei Backzonen (11, 12), wobei jede der mindestens drei Backzonen (11, 12)
- mindestens ein erstes Mittel zur Konvektionsbeheizung (3) der Oberseite und Unterseite des sich auf der mindestens einen Ablage (4) befindlichen Backgutes, wobei das Mittel zur Konvektionsbeheizung (3) mindestens eine Eintrittsöffnung zum Zuführen heißer Luft (5) in den Backraum umfasst, und
- mindestens ein zweites Mittel zur Strahlungsbeheizung (2) der Oberseite und/oder Unterseite des sich auf der mindestens einen Ablage (4) befindlichen Backgutes, wobei das Mittel zur Strahlungsheizung (2) aus Wärmetauscherplatten gebildet wird, wobei
- die Eintrittsöffnungen (1) des Mittels zur Konvektionsbeheizung (3) alternierend zwischen den Wärmetauscherplatten (2) angeordnet sind
umfasst, wobei
- das mindestens eine erste Mittel zur Konvektionsbeheizung (3) und das mindestens eine zweite Mittel zur Strahlungsbeheizung (2) in den mindestens drei Backzonen jeweils unabhängig voneinander ansteuerbar sind,
- so dass in jeder einzelnen Backzone (11, 12) unabhängig von einer anderen Backzone wahlweise Strahlung- und/oder Konvektionsheizung verwendbar ist und jede Backzone (11, 12) separat einstellbar ist.

2. Backofen nach Anspruch 1, **dadurch gekennzeichnet, dass** der Backofen mindestens vier oder mehr Backzonen umfasst.

3. Backofen nach Anspruch 1 oder 2, **dadurch gekennzeichnet, dass** die mindestens eine Eintrittsöffnung (1) in Form einer Düse, eines Schlitzes, einer Löchöffnung oder eines Lochbleches ausgebildet ist.

4. Backofen einem der vorhergehenden Ansprüche, **dadurch gekennzeichnet, dass** die mindestens eine Eintrittsöffnung (1) in mindestens einem oberhalb und/oder unterhalb der mindestens einen Ablage (4) vorgesehenen Windkanal (3) angeordnet ist.

5. Backofen nach einem der vorhergehenden Ansprüche, **dadurch gekennzeichnet, dass** die Strömungsgeschwindigkeit der Konvektionsluft (5) an den Eintrittsöffnungen (1) in den Backraum zwischen 2,0 bis 10 m/s, bevorzugt 3,0 bis 5,0 m/s beträgt.

6. Backofen nach einem der vorhergehenden Ansprüche, **dadurch gekennzeichnet, dass** die mindestens drei Backzonen (11, 12) jeweils mindestens eine, bevorzugt jeweils zwei Vorrichtungen zum Absaugen der in dem Backraum erhitzten Luft umfasst.

7. Backofen nach einem der vorhergehenden Ansprüche, **dadurch gekennzeichnet, dass** die Wärmetauscherplatten (2) des mindestens einen zweiten Mittels zur Strahlungsheizung aus mindestens zwei miteinander verbundenen, bevorzugt miteinander verschweißten, und mindestens einen Hohlraum ausbildenden Blechen gebildet werden.

8. Backofen nach Anspruch 6, **dadurch gekennzeichnet, dass** der mindestens eine Hohlraum von mindestens einem Wärmeträger, bevorzugt Thermoöl, durchströmt wird.

9. Backofen nach Anspruch 6 oder 7, **dadurch gekennzeichnet, dass** der mindestens eine Wärmetauscher separat durch eine Thermoölpumpe ansteuerbar ist.

10. Backofen nach einem der Ansprüche 6 bis 8, **dadurch gekennzeichnet, dass** die Eintrittsöffnungen (1) des ersten Mittels zur Konvektionsbeheizung (3) zwischen den den Wärmeträger führenden Hohlräumen des zweiten Mittels zur Strahlungsheizung (2) vorgesehen sind.

11. Backofen nach einem der Ansprüche 6 bis 9, **dadurch gekennzeichnet, dass** die Eintrittsöffnungen (1) des ersten Mittels zur Konvektionsbeheizung (3) zwischen den den Wärmeträger führenden Hohlräumen der Wärmetauscherplatten in die Platten eingebracht sind.

12. Verwendung eines Backofens (10) nach einem der vorhergehenden Ansprüche zum kontinuierlichen Backen von Brot, Backwaren, Feingebäck.

13. Verfahren zum kontinuierlichen Backen von Backgut in einem Backofen (10) nach einem der Ansprüche 1 bis 11 umfassend die Schritte:
- Einführen des auf der mindestens einen Ablage (4), insbesondere einer Fördereinrichtung abgelegten Backgutes in den mindestens einen Backofen mit mindestens drei Backzonen (11, 12),
- Backen des Backgutes in den mindestens drei Backzonen (11, 12) des Backofens (10), wobei die Wärmeübertragung in jeder der mindestens drei Backzonen (11, 12) durch Ober- und/oder Unterhitze durch Konvektion und/oder Strahlung erfolgt.
- Ausführen des gebackenen Backgutes aus dem mindestens einen Backofen (10).

## Claims

1. Baking oven (10) comprising a baking chamber and comprising at least one support (4) which is provided in the baking chamber for the product being baked,
**characterized by**
at least three baking zones (11, 12), wherein each of the at least three baking zones (11, 12) comprises
- at least one first means for convection heating (3) of the top side and bottom side of the product being baked which is located on the at least one support (4), wherein the means for convection heating (3) comprises at least one inlet opening for supplying hot air (5) into the baking chamber, and
- at least one second means for radiant heating (2) of the top side and/or bottom side of the product being baked which is located on the at least one support (4), wherein the means for radiant heating (2) is formed from heat exchanger plates, wherein
- the inlet openings (1) of the means for convection heating (3) are arranged in an alternating manner between the heat exchanger plates (2),
wherein
- the at least one first means for convection heating (3) and the at least one second means for radiant heating (2) can each be actuated independently of one another in the at least three baking zones,
- so that radiant and/or convection heating can be selectively used in each individual baking zone (11, 12) independently of another baking zone and each baking zone (11, 12) can be separately adjusted.

2. Baking oven according to claim 1, **characterized in that** the baking oven comprises at least four or more baking zones.

3. Baking oven according to Claim 1 or 2, **characterized in that** the at least one inlet opening (1) is designed in the form of a nozzle, a slot, a hole opening or a perforated sheet.

4. Baking oven according to one of the preceding claims, **characterized in that** the at least one inlet opening (1) is arranged in at least one wind tunnel (3) which is provided above and/or below the at least one support (4).

5. Baking oven according to one of the preceding claims, **characterized in that** the flow rate of the convection air (5) at the inlet openings (1) into the baking chamber is between 2.0 and 10 m/s, preferably 3.0 and 5.0 m/s.

6. Baking oven according to one of the preceding claims, **characterized in that** the at least three baking zones (11, 12) each comprise at least one, preferably in each case two, apparatuses for drawing off by suction the air which is heated in the baking chamber.

7. Baking oven according to one of the preceding claims, **characterized in that** the heat exchanger plates (2) of the at least one second means for radiant heating are formed from at least two sheets which are connected to one another, preferably welded to one another, and form at least one hollow space.

8. Baking oven according to Claim 6, **characterized in that** at least one heat carrier, preferably thermal oil, flows through the at least one hollow space.

9. Baking oven according to Claim 6 or 7, **characterized in that** the at least one heat exchanger can be actuated separately by a thermal oil pump.

10. Baking oven according to one of Claims 6 to 8, **characterized in that** the inlet openings (1) of the first means for convection heating (3) are provided between the hollow spaces of the second means for radiant heating (2), which hollow spaces conduct the heat carrier.

11. Baking oven according to one of Claims 6 to 9, **characterized in that** the inlet openings (1) of the first means for convection heating (3) are introduced into the plates between the hollow spaces of the heat exchanger plates, which hollow spaces conduct the heat carrier.

12. Use of a baking oven (10) according to one of the preceding claims for continuously baking bread, baked goods, pastries.

13. Method for continuously baking products in a baking oven (10) according to one of Claims 1 to 11, comprising the steps of:
- inserting the product to be baked, which has been placed on the at least one support (4), in particular a conveying device, into the at least one baking oven with at least three baking zones (11, 12),
- baking the product being baked in the at least three baking zones (11, 12) of the baking oven (10), wherein the heat transfer takes place in each of the at least three baking zones (11, 12) by heating from the top and/or heating from the bottom by way of convection and/or radiation,
- removing the baked product from the at least one baking oven (10).

## Revendications

1. Four de cuisson (10) comprenant un espace de cuisson et au moins un support (4) prévu dans l'espace de cuisson pour le produit à cuire,
**caractérisé par**
au moins trois zones de cuisson (11, 12), chacune desdites au moins trois zones de cuisson (11, 12) comportant
- au moins un premier moyen de chauffage par convection (3) du côté supérieur et du côté inférieur du produit à cuire se trouvant sur ledit au moins un support (4), le moyen de chauffage par convection (3) comprenant au moins une ouverture d'entrée pour l'apport d'air chaud (5) dans l'espace de cuisson, et
- au moins un deuxième moyen de chauffage par rayonnement (2) du côté supérieur et/ou du côté inférieur du produit à cuire se trouvant sur ledit au moins un support (4), le moyen de chauffage par rayonnement (2) étant formé à partir de plaques d'échangeur de chaleur,
- les ouvertures d'entrée (1) du moyen de chauffage par convection (3) étant disposées en alternance entre les plaques d'échangeur de chaleur (2),
- ledit au moins un premier moyen de chauffage par convection (3) et ledit au moins un deuxième moyen de chauffage par rayonnement (2) pouvant être commandés respectivement indépendamment l'un de l'autre dans lesdites au moins trois zones de cuisson,
- de telle sorte que dans chaque zone de cuisson individuelle (11, 12) un chauffage par rayonnement et/ou convection puisse être utilisé sélectivement indépendamment d'une autre zone de cuisson et que chaque zone de cuisson (11, 12) puisse être réglée séparément.

2. Four de cuisson selon la revendication 1, **caractérisé en ce que** le four de cuisson comporte au moins quatre zones de cuisson ou plus.

3. Four de cuisson selon la revendication 1 ou 2, **caractérisé en ce que** ladite au moins une ouverture d'entrée (1) est réalisée sous la forme d'une buse, d'une fente, d'une ouverture perforée ou d'une tôle perforée.

4. Four de cuisson selon l'une des revendications précédentes, **caractérisé en ce que** ladite au moins une ouverture d'entrée (1) est disposée dans au moins un canal d'air (3) prévu au-dessus et/ou en dessous dudit au moins un support (4).

5. Four de cuisson selon l'une des revendications précédentes, **caractérisé en ce que** la vitesse d'écoulement de l'air de convection (5) au niveau des ouvertures d'entrée (1) dans l'espace de cuisson est comprise entre 2,0 et 10 m/s, de préférence entre 3,0 et 5,0 m/s.

6. Four de cuisson selon l'une des revendications précédentes, **caractérisé en ce que** lesdites au moins trois zones de cuisson (11, 12) comportent respectivement au moins un, de préférence respectivement deux dispositifs, pour aspirer l'air chauffé dans l'espace de cuisson.

7. Four de cuisson selon l'une des revendications précédentes, **caractérisé en ce que** les plaques d'échangeur de chaleur (2) dudit au moins un deuxième moyen de chauffage par rayonnement sont formées à partir d'au moins deux tôles reliées les unes aux autres, de préférence soudées les unes aux autres et formant au moins une cavité.

8. Four de cuisson selon la revendication 6, **caractérisé en ce que** ladite au moins une cavité est traversée par au moins un fluide caloporteur, de préférence par de l'huile thermique.

9. Four de cuisson selon la revendication 6 ou 7, **caractérisé en ce que** ledit au moins un échangeur de chaleur peut être commandé séparément par une pompe à huile thermique.

10. Four de cuisson selon l'une des revendications 6 à 8, **caractérisé en ce que** les ouvertures d'entrée (1) du premier moyen de chauffage par convection (3) sont prévues entre les cavités guidant le fluide caloporteur du deuxième moyen de chauffage par rayonnement (2).

11. Four de cuisson selon l'une des revendications 6 à 9, **caractérisé en ce que** les ouvertures d'entrée (1) du premier moyen de chauffage par convection (3) sont ménagées dans les plaques entre les cavités guidant le fluide caloporteur des plaques d'échangeur de chaleur.

12. Utilisation d'un four de cuisson (10) selon l'une des revendications précédentes pour la cuisson en continu de pain, de produits de boulangerie, de pâtisseries.

13. Procédé de cuisson en continu d'un produit à cuire dans un four de cuisson (10) selon l'une des revendications 1 à 11 comportant les étapes :
- introduction du produit à cuire déposé sur ledit au moins un support (4), en particulier d'un dispositif de transport, dans ledit au moins un four de cuisson comprenant au moins trois zones de cuisson (11, 12),
- cuisson du produit à cuire dans lesdites au moins trois zones de cuisson (11, 12) du four de cuisson (10), le transfert de chaleur dans chacune desdites au moins trois zones de cuisson (11, 12) s'effectuant par convection et/ou rayonnement par chaleur supérieure et/ou inférieure,
- guidage du produit à cuire cuit hors dudit au moins un four de cuisson (10).
